# EUROPEAN PATENT APPLICATION

(11) **EP 0 645 656 A1**
(43) Date of publication of application: **29.03.1995**
(21) Application number: 94307013.6
(22) Date of filing: 26.09.1994
(51) Int. Cl.: G02B 6/44

(54) **Device for forming a sleeve entry, especially for glass fibre cables**

(30) Priority: 29.09.1993 DE 4333067
(71) Applicant: WALTER ROSE GmbH & Co. KG, D-58093 Hagen (DE)
(72) Inventor: Fremgen, Dieter, D-42489 Wulfrath (DE); Hill, Gunter, D-58093 Hagen (DE)
(74) Representative: Benson, John Everett

(57) **Abstract**

A device for forming an entry into a sleeve, comprising at least one divided end member, which, in the closed position, carries seals and strain relief elements for incoming cables, especially glass fibre cables, and which is fastened to the sleeve by means of a quick-action band clamp. Each end element (4a, 4b) of the member has half housings (7) for receiving seals (8) and strain relief elements (9), which end elements face towards a dividing plane (5) and can be joined to one another when the end member is closed.

## Description

The invention relates to a device for forming an entry into a sleeve body, especially a butt closure formed for example using a dome ended sleeve, comprising at least one divided end, or base, member which, in the closed position, carries seals and strain relief elements for incoming cables, especially glass fibre cables, and which can be fastened to the sleeve body by means of a quick action band clamp or the like.

Sleeve bodies of the generic kind serve to form branches, distributions and the like in data-transmission networks in which, apart from the multi-conductor cables which have long been known, coaxial cables and, to an increasing extent, also glass fibre cables are used. One problem with the sleeves is that the sleeve housings are normally comparatively easy to seal, especially against the ingress of moisture, but the cable entries into the sleeve body present a greater problem and, in that connection, therefore, a great many solutions have already been described in the literature.

By means of shrink technology it is possible to afford sealing and strain relief by shrinkable cable entry elements. There may be mentioned here, merely by way of example, DE-C-36 07 355, EP-A-0 068 781 or EP-A-0 094 848. Cable entries sealed by means of sealing rings are disclosed in US-4 424 412 whereas, for example, DE-A-40 29 082 discloses a sleeve entry with sealing and strain relief provided by means of a central body.

End members consisting of very thick material and formed by actual sealing elements are disclosed in DE-U-77 25 372 or DE-A-33 20 916. A divided end plate with strain relief elements and seals by means of shrink technology is disclosed in DE-B-24 21 815, and a similar solution in DE-A-29 47 139, while modified sealing bodies are shown in DE-A-24 27 677, DE-C-25 15 939 or DE-A-41 42 586.

The wealth of different, known solutions demonstrates how great is the value placed on the sealing of the cable entries in such sleeve bodies.

The problem of the invention is to provide a solution which, while offering the possibility of easy mounting, makes possible both adaptation to different cable diameters and use with different types of cable, i.e. irrespective of whether the cables consist of bunches of conductors, are coaxial cables or are glass fibre cables.

Using a device of the kind described at the beginning, that problem is solved according to the invention by means of the fact that each end face element is equipped, preferably integrally, with half (etc.) housings also referred to as housing elements for receiving sealing bodies or other seats and strain relief elements, which half housings each face towards a dividing plane (which need not be flat or planar in the geometrical sense) and can be maintained together, and preferably joined, to one another when the half housings are closed together.

The invention provides receiving elements for receiving both the seals and the strain relief elements, which are fully functional as soon as the end elements have been joined together, i.e. inserted cables are reliably sealed and reliably strain-relieved. Since the half housings directly form an effectively integral component of the respective end face elements, a cable entry can easily be fitted with a cable and easily mounted.

In order to make it possible to pass cables through the end or base face not only in the particular plane of partition, the invention provides in construction for the end face elements to be provided with through-bores, wherein a half housing for receiving the seals and strain relief elements is integrally assigned to each through-bore, and the half housings can be combined with further half housings, which can be fastened to them, to form complete cable entries.

The advantages already described above apply to this development of the invention also, especially the simple mounting and the rapid completion to form fully functioning, sealed and strain-relieved cable entries.

In the case of glass fibre cables in particular, the interior of the sleeve should not be overloaded with unnecessary elements and, therefore, provision is made in construction for the half housings to project preferably in the form of pipes from the end elements and advantageously, for the reasons mentioned above, to do so towards the outside of the sleeve in use.

In order to fasten the elements captively to one another, provision can be made for the further half housings to be pivotally or otherwise mounted on the preferably integrally or otherwise attached half housings by means of hinges or the like, it also being possible according to the invention for the half housings to have tapered protrusions (which includes a series of protrusions whose envelope is tapered) which can cooperate with clamping wedges. The wedges preferably have tapered recesses which can slide over the tapered protrusions.

If only two end face elements are provided - although the invention is not limited to this variant and a greater division of the end face may be also provided - it is advantageous for the end face elements to be of substantially identical construction, and therefore generally to be of rotationally symmetrically identical construction.

It may be advantageous, for the purpose of equalising electrical potential, for the cable screens to be provided, in necessary, with a connection to earth via a screen connector. For that purpose, the invention provides for at least one end face element to be provided with an earthing through-bore or other means allowing electrical earthing to be made. Such an earthing through-bore may be provided within a half housing and within a complementary half housing for sealing and strain relief purposes.

Further features, details and advantages of the invention will be apparent from the following description and by reference to the drawings, in which:
- Fig. 1: shows a pot sleeve according to the invention in perspective and partly broken-away, viewed obliquely from below,
- Fig. 2: is the same kind of view of the central plane of partition with cables inserted,
- Fig. 3: is the same kind of view of the corresponding element with cables inserted and an opened cable entry, and
- Fig. 4: is a plan view of the base or end face of a sleeve.

In the examples shown, a dome-shaped sleeve 1 has a device, generally designated 2, for forming the entry into the sleeve body, a divided end member 4 being fastened to the sleeve body by means of a quick-action band clamp 3.

Since the device 2 is not only suitable for forming a base face but can also form end faces of through-sleeves, the elements of the end member 4 are referred to in the following description as end elements 4a and 4b.

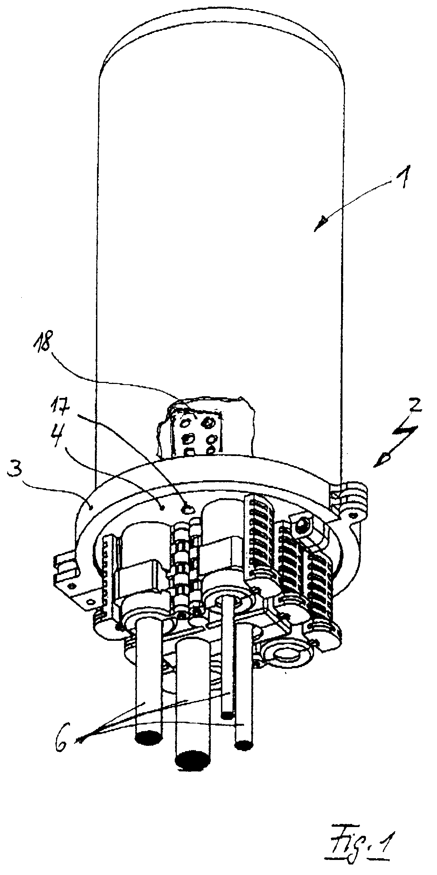

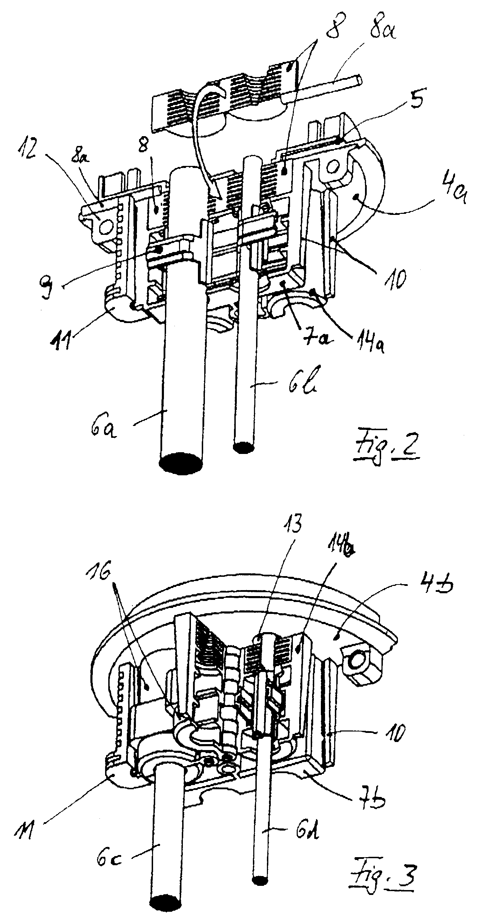

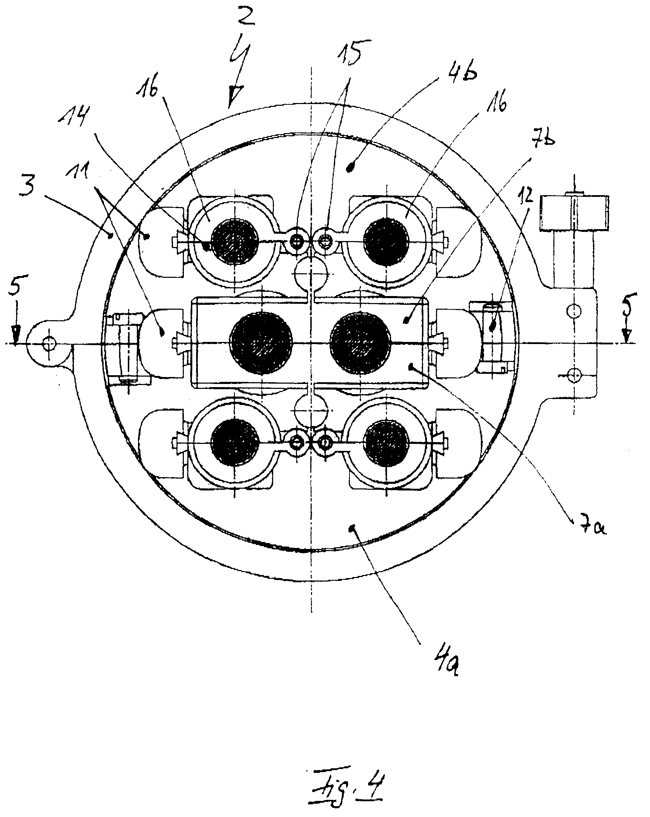

The end element 4a is shown in detail in perspective in Fig. 2, and the end element 4b in Fig. 3, the dividing plane between the two elements being indicated by a dashed line and designated 5 in Fig. 4.

In the example shown, four cables, generally designated 6, enter the sleeve 1, the elements inside the sleeve which are necessary for branching, connecting, distributing or the like not being shown in detail in Figs. 1 to 4. The two cables entering in the dividing plane 5 are designated 6a and 6b in Fig. 2, and the cables entering outside the dividing plane are designated 6c and 6d in Fig. 3.

As will be clear especially from Fig. 2, each end face element 4a and 4b has an integrally formed-on half housing 7a which accommodates the seals, generally designated 8, and the strain relief elements, generally designated 9. The half housings 7 are provided at their edges with tapered protrusions 10 which, in the closed position, are gripped by clamping wedges 11 and clamp the half housings 7a and 7b to each other at the end elements 4a and 4b whilst at the same time sealing and squeezing the seals 8 against each other.

It will be seen that the incoming and outgoing cables 6a and 6b can be inserted in the dividing plane. The strain relief elements 9 are closed and the two end elements 4a and 4b* are clamped to each other, there being additionally provided for that purpose the screw or other connections 12 indicated. The seals 8 in the partition region may be provided integrally with sealing profiles 8a (Fig. 2) for the joins.

The end elements 4a and 4b have, in addition to the half-recesses in the dividing plane, further through-bores 13 (Fig. 3) for the passage of the further cables 6c and 6d, the through-bores 13 again being allocated half housings 14a and 14b, again for receiving the sealing and strain relief elements which are formed integrally with the end elements 4a and 4b. Those half housings also have tapered protrusions 10.

In order to complete those cable entries, half housings 16 that are pivotally mounted by means of hinges 15 and again provided with tapered protrusions are provided, Fig. 3 showing on the left-hand side the closed state with the incoming cable 6c and, on the right-hand side, the open state with the incoming cable 6d. Here too, the tapered protrusions are gripped by clamping wedges 11, thereby fixing the closed position 6.

As will be apparent from the Figures, the half housings 7 and 14 project outward, which makes it possible to open and close them without opening the sleeve 1 itself.

One of the end face elements 4a or 4b can be equipped with an earthing through-bore 17 for the passage of an earth lead to a screen connection plate 18 arranged in the interior of the sleeve 1.

The described illustrative embodiment of the invention may, of course, still be modified in various respects without departing from the underlying concept. In the particular, as already mentioned above, the invention is not limited to dome-shaped sleeves and, instead of the rotationally symmetrically identical construction of the end face elements 4a and 4b shown herein, different shapes may be provided; instead of the central division into two, division into many parts may be provided; the half-housings 16 articulated at individual hinges may, in each end face element, be articulated in one piece at only one hinge in the case of several cable entries; and so on.

## Claims

1. Device for forming an entry into a housing, comprising at least one end member divided along a dividing plane into end elements and which carries seals and strain relief elements for incoming cables, and which can be fastened to the housing, characterised in that each end element (4a, 4b) has housing (7) elements for receiving a seal (8) and strain relief elements (9), and in that a housing element on each end element faces towards the dividing plain (5) and in that this opposing housing elements can be maintained together when the end elements are closed together.

2. Device according to claim 1, characterised in that the end elements (4a, 4b) are provided with through-bores (13), wherein a housing element (14) for receiving the seals and strain relief elements is assigned to each through-bore (13), and the housing elements (14) can be combined with further housing elements (16), which can be fixed to them, to form complete cable entries.

3. Device according to claim 1 or 2, characterised in that the housing elements (7, 14) project from the end elements (4a, 4b).

4. Device according to claim 2 or 3, characterised in that the further housing elements (16) are pivotally mounted on the housing elements.

5. Device according to any one of the preceding claims, characterised in that the housing elements (7, 14, 16) have tapered protrusions (10) which can cooperate with clamping wedges (11) to hold the housing elements together.

6. Device according to one of the preceding claims comprising two end elements, characterised in that the end elements (4a, 4b) are of substantially identical construction.

7. Device according to one of the preceding claims, characterised in that at least one end element (4a or 4b) is provided with means (17) allowing electrical earthing to be made.
